# EUROPÄISCHE PATENTSCHRIFT

(11) **EP 2 042 797 B1**
(45) Veröffentlichungstag und Bekanntmachung des Hinweises auf die Patenterteilung: **15.12.2010**
(21) Anmeldenummer: 07020406.0
(22) Anmeldetag: 18.10.2007
(51) Int. Cl.: F16L 33/207, F16L 33/23

(54) **Verbindungsanordnung für Wickelschläuche**
Connecting assembly for strip wound hoses
Agencement de raccordement pour tuyaux d'enroulement

(30) Priorität: 26.09.2007 DE 202007013538 U
(43) Veröffentlichungstag der Anmeldung: 01.04.2009
(73) Patentinhaber: NORRES Schlauchtechnik GmbH & Co. KG, 45881 Gelsenkirchen (DE)
(72) Erfinder: Mollen, Burkhard, 45134 Essen (DE)
(74) Vertreter: Rohmann, Michael

(56) Entgegenhaltungen:
- EP-A- 1 557 257
- EP-A- 1 983 246
- DE-A1- 19 907 412
- DE-U1- 29 719 458
- GB-A- 2 104 992
- GB-A- 2 340 906
- GB-A- 2 362 694

## Beschreibung

Die Erfindung betrifft eine Verbindungsanordnung für Wickelschläuche, wobei ein Wickelschlauch und ein in den Wickelschlauch formschlüssig einfassender Schlauchstutzen vorgesehen sind. Der Wickelschlauch besteht aus Kunststoff bzw. im Wesentlichen aus Kunststoff bzw. thermoplastischem Kunststoff. Zur Herstellung des Wickelschlauches wird zweckmäßigerweise ein Kunststoffstreifen auf einen zylinderförmigen Wickelkern wendelförmig zu dem Wickelschlauch kontinuierlich gewickelt. Dabei werden Längskantenabschnitte benachbarter Wendelwicklungen des Kunststoffstreifens überlappend miteinander verbunden. Es liegt im Rahmen der Erfindung, dass der Kunststoffstreifen mit einer drahtförmigen oder bandförmigen Armierung wendelförmig zu dem Wickelschlauch gewickelt wird. Der in den Wickelschlauch einfassende Schlauchstutzen dient zum Anschluss des Wickelschlauches an Vorrichtungen, Armaturen oder andere Leitungen.

Verbindungsanordnungen der vorstehend beschriebenen Art sind aus der Praxis grundsätzlich bekannt. Bei diesen bekannten Verbindungsanordnungen besteht das Problem, dass der Schlauchstutzen insbesondere bei Beaufschlagung der Verbindungsanordnung mit fluiden Medien unter hohem Druck aus dem Wickelschlauch gelöst bzw. gedrückt werden kann. Man hat bereits versucht, durch verhältnismäßig aufwendige Maßnahmen ein solches Lösen des Schlauchstutzens aus dem Wickelschlauch zu verhindern.

Aus GB-A 2340906 ist eine Verbindungsanordnung für Wickelschläuche bekannt und auch hier ist ein in einen Wickelschlauch formschlüssig einfassender Schlauchstutzen vorhanden. Es sind fernerhin zwei Klemmschalen vorgesehen, die zur Sicherung des Schlauchstutzens in dem Wickelschlauch dienen. Über einen Teil der Länge des Klemmschalenaggregates erstreckt sich eine elastische Dichtung. Weiterhin ist bei dem hier offenbarten Wickelschlauch eine bandförmige Armierung auf der Außenoberfläche des Wickelschlauches angeordnet. Der Kunststoff dieses bekannten Wickelschlauches soll aus einem weichen PVC-Material bestehen, dass sehr flexibel ist. Die hier beschriebene Verbindungsanordnung lässt im Hinblick auf eine langfristig funktionssichere Fixierung von Schlauchstutzen und Wickelschlauch zu wünschen übrig.

Auch aus GB-A 2362694 ist eine Verbindungsanordnung für Schläuche bekannt, bei der ein Schlauchstutzen formschlüssig in einen Schlauch einfasst. Diese Verbindungsanordnung arbeitet mit einer Presshülse und insoweit handelt es sich um eine Pressverbindungsanordnung. Bei dieser Verbindungsanordnung ist eine wendelförmige Armierung auf der Außenoberfläche des Schlauches angeordnet. Auch diese Verbindungsanordnung lässt im Hinblick auf eine langfristig funktionssichere Verbindung von Schlauchstutzen und Wickelschlauch zu wünschen übrig.

Der Erfindung liegt das technische Problem zugrunde, eine Verbindungsanordnung für Wickelschläuche anzugeben, bei der der Schlauchstutzen auch bei Beaufschlagung mit hohen Drucken mit einfachen und wenig aufwendigen Maßnahmen funktionssicher in dem Wickelschlauch gehalten wird.

Zur Lösung dieses technischen Problems lehrt die Erfindung eine Verbindungsanordnung für Wickelschläuche, nach Patentanspruch 1 oder nach Patentanspruch 2.

Montierte Verbindungsanordnung meint im Rahmen der Erfindung, dass das zylinderförmige Fixierungsaggregat an dem Aggregat aus Wickelschlauch und Schlauchstutzen bereits fixiert bzw. montiert ist. - Es liegt im Rahmen der Erfindung, dass der Außendurchmesser des Schlauchstutzens an den Innendurchmesser des Wickelschlauches angepasst ist. Zweckmäßigerweise entspricht der Außendurchmesser des wickelschlauchseitigen Schlauchstutzenendes dem Innendurchmesser des Wickelschlauches oder der Außendurchmesser ist geringfügig größer als der Innendurchmesser des Wickelschlauches. Außendurchmesser des genannten Schlauchstutzenendes und Innendurchmesser des Wickelschlauches sind vorzugsweise mit der Maßgabe eingerichtet, dass der Schlauchstutzen bzw. das wickelschlauchseitige Schlauchstutzenende formschlüssig und kraftschlüssig in dem Wickelschlauch aufgenommen ist. Auf diese Weise werden Toträume zwischen Wickelschlauch und Schlauchstutzen und somit unerwünschte Materialansammlungen vermieden.

Erfindungsgemäß wird der Wickelschlauch durch wendelförmiges Aufwickeln zumindest eines Kunststoffstreifens hergestellt, wobei Längskantenabschnitte benachbarter Wendelwicklungen des Kunststoffstreifens überlappend miteinander verbunden sind. Fernerhin besteht der Kunststoffstreifen aus einem thermoplastischen Kunststoff in Form von Polyurethan. Zweckmäßigerweise erfolgt das wendelförmige Aufwickeln des Kunststoffstreifens auf einem zylinderförmigen Wickelkern. Nach einer besonders bevorzugten Ausführungsform der Erfindung werden die Längskantenabschnitte benachbarter Wendelwicklungen des Kunststoffstreifens durch Einbringen eines schmelzflüssigen Zusatzkunststoffes zwischen den einander zugeordneten Längskantenabschnitten stoffschlüssig miteinander verschweißt. Dieser Ausführungsform kommt im Rahmen der Erfindung besondere Bedeutung zu. Eine empfohlene Ausführungsform der Erfindung zeichnet sich dadurch aus, dass der Zusatzkunststoff bzw. Schweißzusatzwerkstoff aus einem thermoplastischen Kunststoff besteht, aus dem auch der Kunststoffstreifen des Wickelschlauches besteht. Es liegt weiterhin im Rahmen der Erfindung, dass die Dicke des Kunststoffstreifens im Vergleich zum Durchmesser des herzustellenden Wickelschlauches gering ist und insoweit auch die Wanddicke des Wickelschlauches gering im Vergleich zu seinem Durchmesser ist.

Erfindungsgemäß wird der Kunststoffstreifen mit einer drahtförmigen oder bandförmigen Armierung wendelförmig zu dem Wickelschlauch kontinuierlich gewickelt. Eine Ausführungsvariante ist **dadurch gekennzeichnet, dass** die drahtförmige oder bandförmige Armierung mittels des schmelzflüssigen Zusatzkunststoffes an dem Kunststoffstreifen fixiert wird. Erfindungsgemäß wird die drahtförmige oder bandförmige Armierung zwischen den überlappenden Längskantenabschnitten eingeschweißt. Es liegt fernerhin im Rahmen der Erfindung, dass die drahtförmige/bandförmige wendelförmige Armierung aus der übrigen äußeren Schlauchoberfläche hervorsteht. Nach einer Ausführungsform der Erfindung ist die wendelförmige Armierung elektrisch leitfähig und/oder metallisch und vorzugsweise wird diese wendelförmige Armierung dann zur Erzeugung einer durchgehenden elektrisch leitfähigen Verbindung an dem elektrisch leitfähigen und/oder metallischen Schlauchstutzen fixiert wird. Dazu wird die mit dem Schlauchstutzen in Kontakt zu bringende wendelförmige Armierung zweckmäßigerweise abisoliert bzw. von nichtleitfähigem Kunststoff getrennt und vorzugsweise radial gebogen sowie empfohlenermaßen beim Einschieben des Schlauchstutzens zwischen der Innenwandung des Wickelschlauches und der Außenoberfläche des Schlauchstutzens positioniert. Bei Herstellung der Klemmverbindung bzw. Pressverbindung wird die wendelförmige Armierung durch die Anpresskraft sicher auf den Schlauchstutzen gedrückt, so dass die Schlauchleitung dann eine durchgehende elektrische Leitfähigkeit aufweist. Eine metallische wendelförmige Armierung kann auch an den Schlauchstutzen gelötet und/oder geschweißt und/oder geschraubt werden. Eine besonders bevorzugte Ausführungsform der Erfindung ist **dadurch gekennzeichnet, dass** die Erhebung an der Wickelschlauchoberfläche die aus der Wickelschlauchoberfläche hervorstehende wendelförmige Armierung ist und dass die wendelförmige Armierung bei montierter Verbindungsanordnung in zumindest eine in der Innenoberfläche des Fixierungsaggregates vorhandene Nut formschlüssig einfasst. Eine sehr empfohlene Ausführungsform der Erfindung zeichnet sich dadurch aus, dass die wendelförmige Armierung in eine über den Innenumfang des Dichtungseinsatzes wendelförmig umlaufende Nut formschlüssig eingreift. Es versteht sich, dass sich dieses Eingreifen auf den montierten Zustand der Verbindungsanordnung bezieht. Vorzugsweise läuft die wendelförmige Nut bei monierter Verbindungsanordnung zumindest zweimal, vorzugsweise zumindest dreimal über den Innenumfang des Dichtungseinsatzes um. Zweckmäßigerweise fasst die aus der Wickelschlauchoberfläche hervorstehende wendelförmige Armierung ohne Spiel bzw. im Wesentlichen ohne Spiel in die wendelförmig umlaufende Nut formschlüssig ein. Nach sehr bevorzugter Ausführungsform der Erfindung bildet die Innenoberfläche des Dichtungseinsatzes zumindest bereichsweise ein komplementäres Abbild der Wickelschlauchoberfläche. Wickelschlauchoberfläche meint im Übrigen die Außenoberfläche des Wickelschlauches.

Zweckmäßigerweise besteht der Schlauchstutzen aus einem Metall. Grundsätzlich kann der Schlauchstutzen aber auch aus einem Kunststoff bestehen. Die Außenoberfläche des wickelschlauchseitigen Schlauchstutzenendes ist nach einer Ausführungsvariante unprofiliert bzw. glatt ausgebildet. Gemäß einer anderen Ausführungsvariante kann die Außenoberfläche des wickelschlauchseitigen Schlauchstutzenendes aber auch profiliert sein bzw. mit einer Zahnung versehen sein. Empfohlenermaßen weist der Schlauchstutzen an seinem wickelschlauchabgewandten Schlauchstutzenende zumindest ein Anschlusselement auf, das beispielsweise in Form eines Gewindes ausgebildet ist. Es liegt im Rahmen der Erfindung, dass das Fixierungsaggregat zumindest ein Formschlusselement aufweist, welches Formschlusselement bei montierter Verbindungsanordnung mit einem Komplementärformschlusselement am Schlauchstutzen mit der Maßgabe wechselwirkt, dass ein Herausschieben des Schlauchstutzens aus dem Wickelschlauch blockiert wird. Das an dem Fixierungsaggregat vorhandene Formschlusselement läuft zweckmäßigerweise über zumindest einen Teil des Innenumfangs des Fixierungsaggregates um und ist vorzugsweise eine über zumindest einen Teil des Innenumfangs des Fixierungsaggregates umlaufende Formschlussnut. Empfohlenermaßen ist das Formschlusselement eine über den gesamten Innenumfang oder im Wesentlichen über den gesamten Innenumfang des Fixierungsaggregates umlaufende Formschlussnut. Die Formschlussnut ist zweckmäßigerweise im Querschnitt kreisförmig bzw. ringförmig ausgebildet. Es empfiehlt sich, dass das Komplementärformschlusselement des Schlauchstutzens über zumindest einen Teil des Außenumfangs des Schlauchstutzens umläuft und vorzugsweise handelt es sich dabei um einen über zumindest einen Teil des Außenumfanges des Schlauchstutzens umlaufenden Formschlusssteg. Zweckmäßigerweise läuft der Formschlusssteg über den gesamten Außenumfang oder im Wesentlichen über den gesamten Außenumfang des Schlauchstutzens um. Vorzugsweise ist der Formschlusssteg im Querschnitt kreisförmig bzw. ringförmig ausgebildet. Es liegt im Rahmen der Erfindung, dass der Formschlusssteg im montierten Zustand des Fixierungsaggregates formschlüssig in die Formschlussnut eingreift.

Nach einer Ausführungsform der Erfindung weist das Fixierungsaggregat zumindest zwei Klemmschalen auf, die sich bei montierter Verbindungsanordnung zu einem zylinderförmigen Klemmschalenaggregat ergänzen und den Wickelschlauch im Bereich des einfassenden Schlauchstutzens zumindest bereichsweise klemmend formschlüssig umgeben. Bei der Verbindungsanordnung handelt es sich bei dieser Ausführungsform also um eine Klemmverbindungsanordnung. Die Klemmverbindung wird zweckmäßigerweise durch Verschrauben der Klemmschalen hergestellt. Zweckmäßigerweise bilden lediglich zwei Klemmschalen das Klemmschalenaggregat, das bei montierter Klemmverbindung den Wickelschlauch im Bereich des einfassenden Schlauchstutzens zumindest bereichsweise klemmend formschlüssig umgibt. Der Innenumfang bzw. die Innenseite einer Klemmschale ist vorzugsweise halbzylinderförmig ausgebildet, so dass der Innenumfang bzw. die Innenseite des montierten Klemmschalenaggregates zylinderförmig bzw. im Wesentlichen zylinderförmig ausgebildet ist.

Nach besonders bevorzugter Ausführungsvariante der Erfindung bestehen die Klemmschalen aus einem Metall bzw. im Wesentlichen aus einem Metall. Grundsätzlich können die Klemmschalen aber auch aus einem Kunststoff, beispielsweise aus einem faserverstärkten bzw. glasfaserverstärkten Kunststoff bestehen. Klemmschalen aus Kunststoff können beispielsweise im Spritzgussverfahren hergestellt werden.

Erfindungsgemäß weist das Fixierungsaggregat einen innenseitigen zylinderförmigen Dichtungseinsatz auf und die Vertiefung, vorzugsweise die wendelförmig umlaufende Nut ist in der mit der Wickelschlauchoberfläche in Kontakt stehenden Innenoberfläche des Dichtungseinsatzes vorgesehen. Die Innenoberfläche des Dichtungseinsatzes bildet also eine Formschlussverbindung mit der Wickelschlauchoberfläche bzw. mit der Außenoberfläche des Wickelschlauches. Es liegt im Rahmen der Erfindung, dass die Innenoberfläche des Dichtungseinsatzes zumindest bereichsweise ein komplementäres Abbild der Wickelschlauchoberfläche bildet. Erfindungsgemäß besteht sowohl der Wickelschlauch als auch der Dichtungseinsatz aus einem Polyurethan. Bevorzugt hat dabei das Polyurethan des Dichtungseinsatzes eine etwas höhere Härte als das Polyurethan des Wickelschlauches. Gemäß einer bevorzugten Ausführungsvariante weist der Dichtungseinsatz eine charakteristische Farbe auf. Dadurch lassen sich verschiedene Wickelschlauchleitungen auf einfache Weise unterscheiden. Das ist insbesondere vorteilhaft an Vorrichtungen, an denen mehrere Schlauchleitungen verwendet werden, die nicht vertauscht werden dürfen, wie beispielsweise in der Lebensmittelverarbeitung oder Pharmazeutikherstellung. Es liegt im Rahmen der Erfindung, dass der Kunststoff des Dichtungseinsatzes zumindest einen entsprechenden Farbzusatz aufweist. Weiterhin kann der Kunststoff des Dichtungseinsatzes auch mit antiseptischen antibakteriellen Additiven versehen werden, so dass dann ein Schutz gegenüber Bakterien und/oder Pilzen gegeben ist. Der vorstehend beschriebene innenseitige Dichtungseinsatz kann sowohl bei einer erfindungsgemäßen Klemmverbindungsanordnung als auch bei einer erfindungsgemäßen Pressverbindungsanordnung verwendet werden. Der Dichtungseinsatz ist im Übrigen nach sehr bevorzugter Ausführungsform der Erfindung einstückig ausgebildet bzw. als einstückiges Kunststoffteil ausgebildet. Im Rahmen der Erfindung können in Längsrichtung des Wickelschlauches auch mehrere Dichteinsätze hintereinander angeordnet werden.

Gemäß einer Ausführungsvariante der Erfindung weist das Fixierungsaggregat zumindest zwei Klemmschalen - vorzugsweise zwei Klemmschalen - und einen innenseitigen zylinderförmigen Dichtungseinsatz auf. Im montierten Zustand dieser Klemmverbindungsanordnung liegt der Dichtungseinsatz formschlüssig auf der Wickelschlauchoberfläche auf und die zweckmäßigerweise miteinander verschraubten Klemmschalen drücken den Dichtungseinsatz gegen den Wickelschlauch. Bei dieser Ausführungsform bilden also die Klemmschalen bzw. das Klemmschalenaggregat mit dem Dichtungseinsatz das Fixierungsaggregat. Bei der Montage dieser Klemmverbindung wird vorzugsweise der Dichtungseinsatz zunächst auf den Wickelschlauch aufgebracht, vorzugsweise auf den Wickelschlauch aufgedreht und dann werden die Klemmschalen auf dem Dichtungseinsatz miteinander verbunden, zweckmäßigerweise miteinander verschraubt. Empfohlenermaßen weisen die Klemmschalen innenseitig vorstehende Druckelemente auf, die im montierten Zustand der Klemmverbindungsanordnung den Dichteinsatz an den Wickelschlauch drücken. Vorzugsweise handelt es sich bei diesen Druckelementen um im Querschnitt ringförmige bzw. kreisförmige Rippen, die zweckmäßigerweise jeweils über den Innenumfang des Klemmschalenaggregates umlaufen. Bei Herstellung der Klemmverbindung bzw. beim Verschrauben der Klemmschalen verkrallen sich die Rippen gleichsam in dem Dichtungseinsatz, so dass der Dichtungseinsatz auf den Wickelschlauch drückt bzw. den Wickelschlauch auf den Schlauchstutzen drückt. Vorzugsweise sind die vorgenannten Rippen parallel zu einer über den Innenumfang des Fixierungsaggregates bzw. des Klemmschalenaggregates umlaufenden Formschlussnut angeordnet, die mit einem komplementären Formschlusssteg des Schlauchstutzens eine Formschlussverbindung bildet.

Gemäß einer anderen Ausführungsform der Erfindung ist das zylinderförmige Fixierungsaggregat als zylindrische Presshülse ausgebildet, welche Presshülse im montierten Zustand der Verbindungsanordnung bzw. Pressverbindungsanordnung außen einen verpressten zylinderförmigen Pressmantel aufweist sowie innenseitig einen zylinderförmigen Dichtungseinsatz. Der Pressmantel ist vorzugsweise einstückig ausgebildet und besteht zweckmäßigerweise aus Metall. Bei der Montage dieser Pressverbindung wird der Pressmantel auf den Wickelschlauch aufgebracht und radial zum Wickelschlauch hin verpresst bzw. gestaucht. Dadurch wird der innenseitige Dichtungseinsatz an den Wickelschlauch angedrückt. Auch bei dieser Ausführungsform ist die Innenoberfläche des Dichtungseinsatzes formschlüssig mit der Wickelschlauchoberfläche verbunden. Nach einer Herstellungsvariante der Pressverbindung kann der Dichteinsatz als separates Teil ausgeführt sein und wird dann zunächst separat auf den Wickelschlauch aufgebracht, insbesondere auf den Wickelschlauch aufgedreht. Anschließend wird der Pressmantel über den Dichtungseinsatz geschoben und es erfolgt das Verpressen für die Herstellung der Pressverbindung. Gemäß einer anderen Herstellungsvariante der Pressverbindung kann der Dichtungseinsatz aber auch mit dem Pressmantel verbunden sein, insbesondere durch eine Spritzgussverbindung.

Empfohlenermaßen weist der Pressmantel der Presshülse innenseitig vorstehende Druckelemente auf, die im montierten Zustand der Verbindungsanordnung bzw. der Pressverbindungsanordnung den Dichtungseinsatz an den Wickelschlauch drücken. Dabei handelt es sich zweckmäßigerweise um im Querschnitt ringförmige bzw. kreisförmige Rippen, die jeweils über den Innenumfang des Pressmantels umlaufen. Diese Druckelemente bewirken beim Verpressen ein Verkrallen des Pressmantels mit dem Dichtungseinsatz, so dass dieser positionssicher auf dem Wickelschlauch fixiert wird.

Vorzugsweise weist der Pressmantel der Presshülse einen nach innen gerichteten Kragen auf, der über den Innenumfang des Pressmantels umläuft und als Formschlusselement im montierten Zustand der Pressverbindungsanordnung einen als Komplementärformschlusselement ausgebildeten Formschlusssteg des Schlauchstutzens formschlüssig hintergreift. Durch diese formschlüssige Verbindung zwischen Pressmantel und Schlauchstutzen wird ein Herausschieben des Schlauchstutzens aus dem Wickelschlauch insbesondere bei Druckbeaufschlagung blockiert.

Der Erfindung liegt die Erkenntnis zugrunde, dass mit der erfindungsgemäßen Verbindungsanordnung eine langfristig feste und funktionssichere Verbindung von Wickelschlauch und Schlauchstutzen sichergestellt werden kann. Die erfindungsgemäßen Ausführungsformen der Verbindungsanordnung erweisen sich allesamt als sehr widerstandsfähig gegenüber mechanischen Beanspruchungen. Von besonderer Bedeutung ist, dass die erfindungsgemäße Verbindungsanordnung auch bei Beaufschlagung mit hohen Drücken eine einwandfreie Verbindung zwischen Wickelschlauch und Schlauchstutzen sicherstellt. Die einzelnen Elemente der Verbindungsanordnung können auf einfache Weise und verhältnismäßig kostengünstig hergestellt werden. Die Montage kann bei den Ausführungsformen der erfindungsgemäßen Verbindungsanordnung jeweils auf zügige und einfache Weise erfolgen.

Nachfolgend wird die Erfindung anhand einer lediglich ein Ausführungsbeispiel darstellenden Zeichnung näher erläutert. Es zeigen in schematischer Darstellung:

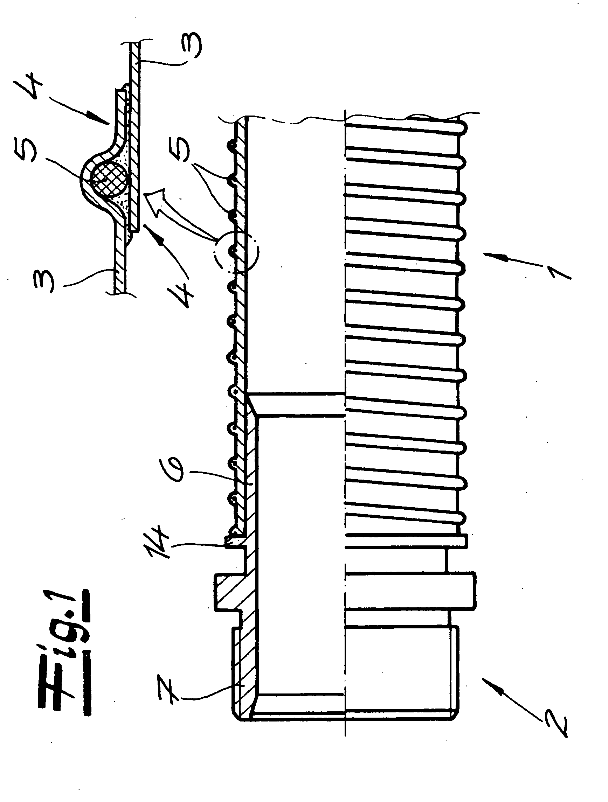

- Fig. 1: eine Seitenansicht eines in einen Wickelschlauch einfassenden Schlauchstutzens ohne erfindungsgemäßes Fixierungsaggregat,
- Fig. 2: den Gegenstand nach Fig. 1 bei montiertem Fixierungsaggregat bzw. Klemmschalenaggregat mit zwischengeschaltetem Dichtungseinsatz,
- Fig. 3: eine Innenansicht einer Klemmschale (Innenseite bzw. Innen- umfang der Klemmschale) bei der Ausführungsform nach Fig. 2,
- Fig. 4: eine Innenansicht des Dichtungseinsatzes (Innenseite bzw. Innen- umfang des Dichtungseinsatzes) bei der Ausführungsform nach Fig. 2,
- Fig. 5: eine Frontansicht des montierten Fixierungsaggregates (bzw. Klemmschalenaggregates) gemäß Fig. 2 aus Richtung des Pfeils A,
- Fig. 6: den Gegenstand nach Fig. 1 bei montiertem Fixierungsaggregat in Form eines Pressverbindungsaggregates im bereits verpressten Zustand und
- Fig. 7: eine Frontansicht des Gegenstandes nach Fig. 6 aus Richtung des Pfeils B im noch nicht verpressten Zustand.

Die Figuren betreffen eine Verbindungsanordnung für Wickelschläuche 1 wobei ein in einen Wickelschlauch 1 formschlüssig einfassender Schlauchstutzen 2 vorgesehen ist. Der Wickelschlauch 1 wird durch wendelförmiges Aufwickeln eines Kunststoffstreifens 3 hergestellt, wobei Längskantenabschnitte 4 benachbarter Wendelwicklungen des Kunststoffstreifens 3 überlappend miteinander verbunden sind. Zweckmäßigerweise und im Ausführungsbeispiel wird der Kunststoffstreifen 3 mit einer drahtförmigen Armierung wendelförmig zu dem Wickelschlauch 1 kontinuierlich gewickelt. Bei der drahtförmigen Armierung handelt es sich vorzugsweise und im Ausführungsbeispiel um einen Metalldraht 5. Die drahtförmige wendelförmige Armierung bzw. der Metalldraht 5 steht aus der übrigen Wickelschlauchoberfläche radial nach außen hervor.

Der Außendurchmesser des wickelschlauchseitigen Schlauchstutzenendes 6 ist an den Innendurchmesser des Wickelschlauches 1 angepasst. Vorzugsweise und im Ausführungsbeispiel greift das wickelschlauchseitige Schlauchstutzenende 6 formschlüssig und kraftschlüssig sowie ohne Spiel in den Wickelschlauch 1 ein. Zweckmäßigerweise und im Ausführungsbeispiel ist die Außenoberfläche des wickelschlauchseitigen Schlauchstutzenendes 6 glatt und unprofiliert ausgebildet. Der Schlauchstutzen 2 dient zur Verbindung des Wickelschlauches 1 mit einer Vorrichtung bzw. Armatur oder einer weiteren Leitung. Im Ausführungsbeispiel nach den Figuren weist das wickelschlauchabgewandte Schlauchstutzenende 7 jeweils ein Verbindungselement für diese Verbindung auf.

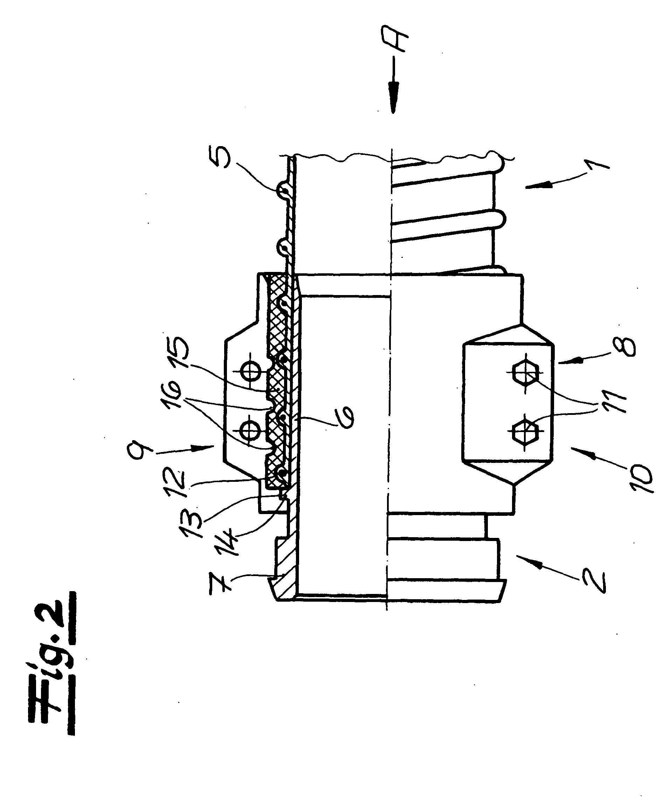

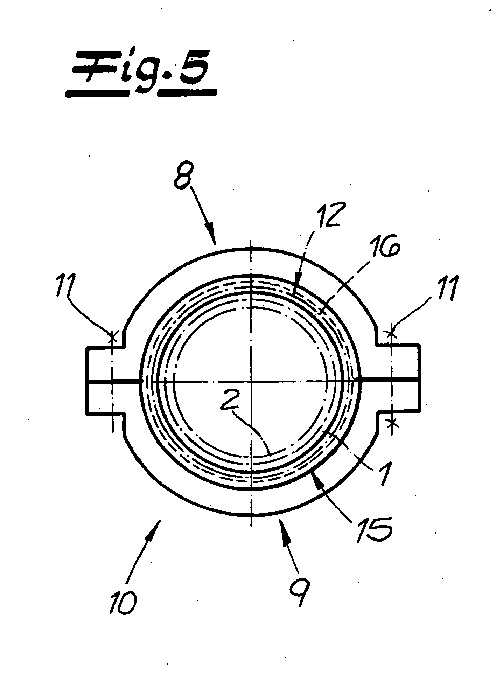

Bei allen Ausführungsformen der Figuren ist ein zylinderförmiges Fixierungsaggregat vorgesehen, das bei montierter Verbindungsanordnung den Wickelschlauch 1 im Bereich des einfassenden Schlauchstutzens 2 klemmend und/oder pressend formschlüssig umgibt. Das zylinderförmige Fixierungsaggregat weist einen innenseitigen zylinderförmigen Dichtungseinsatz 15 auf, der an seiner mit der Wickelschlauchoberfläche in Kontakt stehenden Innenoberfläche eine wendelförmig über den Innenumfang des Dichtungseinsatzes 15 umlaufende Nut 12 aufweist, in die die wendelförmige Armierung an der Wickelschlauchoberfläche im montierten Zustand formschlüssig eingreift. Bei den Ausführungsformen nach den Figuren 2 bis 5 weist das Fixierungsaggregat ein Klemmschalenaggregat 10 auf. Es sind zwei Klemmschalen 8, 9 vorgesehen, die bei montierter Klemmverbindung dieses Klemmschalenaggregat 10 bilden. Die Fig. 2 und 5 zeigen den Zustand bei montierter Klemmverbindungsanordnung. Die Klemmschalen 8, 9 bestehen zweckmäßigerweise aus Metall. Die Verbindung der Klemmschalen 8, 9 zum Klemmschalenaggregat 10 erfolgt zweckmäßigerweise durch Verschraubung und entsprechende Schrauben 11 sind in den Figuren angedeutet worden.

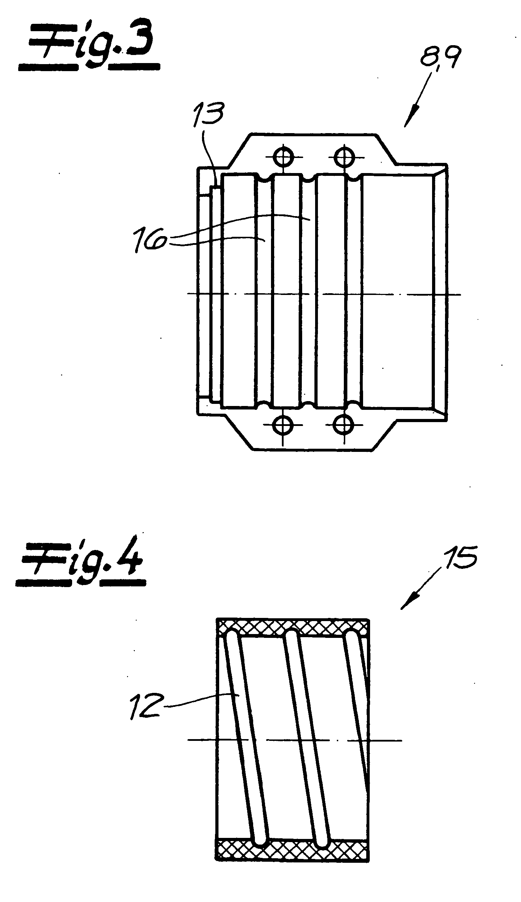

Im Ausführungsbeispiel nach den Fig. 2 bis 5 weist das Fixierungsaggregat ein Klemmschalenaggregat 10 auf. Es sind zwei Klemmschalen 8, 9 vorgesehen, die bei montierter Klemmverbindung das Klemmschalenaggregat 10 bilden. Die Klemmschalen 8, 9 bestehen zweckmäßigerweise aus Metall. Die Verbindung der Klemmschalen 8, 9 zum Klemmschalenaggregat 10 erfolgt bei dieser Ausführungsform vorzugsweise durch Verschraubung. Das Fixierungsaggregat weist einen innenseitigen zylinderförmigen Dichtungseinsatz 15 auf. Der Dichtungseinsatz 15 besteht zweckmäßigerweise aus Kunststoff. Im Ausführungsbeispiel nach den Fig. 2 bis 5 ist die wendelförmig umlaufende Nut 12 in der mit der Wickelschlauchoberfläche in Kontakt stehenden Innenoberfläche des Dichtungseinsatzes 15 vorgesehen (siehe insbesondere Fig. 4). Die aus der Wickelschlauchoberfläche hervorstehende wendelförmige Armierung (wendelförmiger Metalldraht 5) fasst bei montierter Klemmverbindung in die an der Innenoberfläche des Dichtungseinsatzes 15 vorgesehene Nut 12 formschlüssig ein. Das Eingreifen des Metalldrahtes 5 in die Nut 12 erfolgt zweckmäßigerweise ohne Spiel bzw. im Wesentlichen ohne Spiel. Der Dichtungseinsatz 15 ist vorzugsweise einstückig und ohne Unterbrechung über den Innenumfang des Klemmschalenaggregates 10 umlaufend ausgebildet. Im montierten Zustand der Klemmverbindung drücken die Klemmschalen 8, 9 bzw. die vorzugsweise verschraubten Klemmschalen 8, 9 den Dichtungseinsatz 15 gegen die Wickelschlauchoberfläche. Bevorzugt und im Ausführungsbeispiel (Fig. 3) sind an den Klemmschalen 8, 9 dazu innenseitig vorstehende Druckelemente vorgesehen, die zweckmäßigerweise als im Querschnitt ringförmige bzw. kreisförmige Rippen 16 ausgeführt sind, die jeweils über den Innenumfang des Klemmschalenaggregates 10 umlaufen.

In den Ausführungsbeispielen nach den Fig. 2 bis 5 weisen die Klemmschalen 8, 9 bzw. weist das Klemmschalenaggregat 10 im Übrigen eine über den Innenumfang des Klemmschalenaggregates 10 umlaufende Formschlussnut 13 auf, die vorzugsweise und im Ausführungsbeispiel im Querschnitt kreisförmig bzw. ringförmig ausgebildet ist. Der Schlauchstutzen 2 weist an seinem wickelschlauchseitigen Schlauchstutzenende 6 ein entsprechendes Komplementärformschlusselement auf, bei dem es sich um einen über den Außenumfang des Schlauchstutzenendes 6 umlaufenden Formschlusssteg 14 handelt. Im montierten Zustand der Klemmverbindung fasst der Formschlusssteg 14 des Schlauchstutzens 2 in die Formschlussnut 13 der Klemmschalen 8, 9 bzw. des Klemmschalenaggregates 10 ein. Durch diese Formschlussverbindung wird ein axiales Herausschieben des Schlauchstutzens 2 aus dem Wickelschlauch 1 effektiv verhindert.

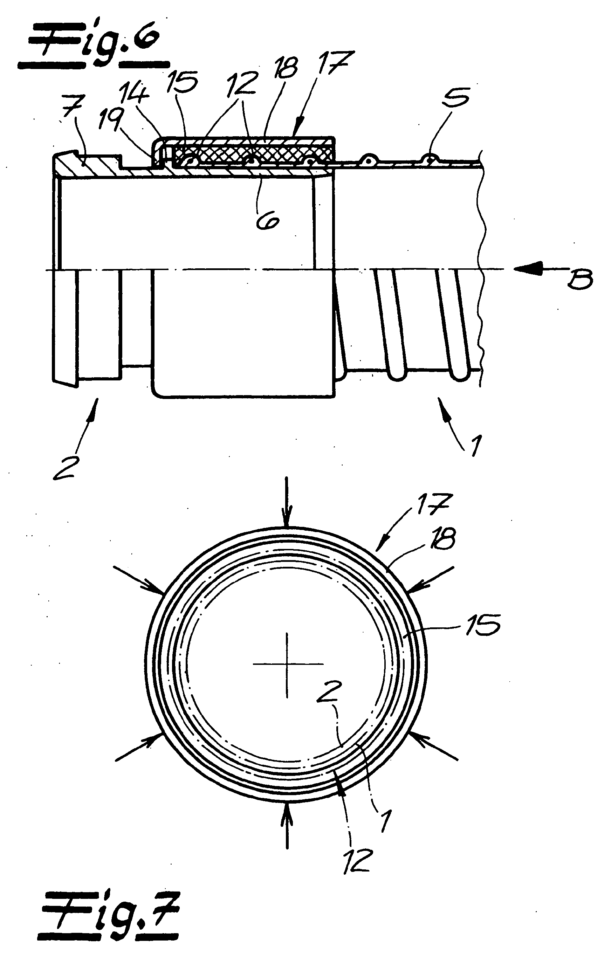

In den Fig. 6 und 7 ist eine andere Ausführungsform der Erfindung dargestellt, bei der das Fixierungsaggregat als Presshülse 17 ausgebildet ist. Die Verbindungsanordnung ist hier also als Pressverbindungsanordnung ausgeführt. Die zylindrische Presshülse 17 weist einen zylinderförmigen Pressmantel 18 auf, der vorzugsweise aus einem Metall besteht sowie innenseitig einen zylinderförmigen Dichtungseinsatz 15, der aus Polyurethan besteht. In Fig. 6 ist die bereits montierte bzw. verpresste Pressverbindung dargestellt, während Fig. 7 den Zustand vor dem Verpressen des Pressmantels 18 zeigt. Nach einer Herstellungsvariante und im Ausführungsbeispiel wird der Dichtungseinsatz 15 zunächst auf den Wickelschlauch 1 aufgebracht und vorzugsweise auf den Wickelschlauch 1 aufgedreht. Anschließend wird der Pressmantel 18 aufgeschoben und der Pressmantel 18 wird dann radial nach innen verpresst bzw. gestaucht, was in Fig. 7 durch entsprechende Pfeile angedeutet wurde. Der verpresste Pressmantel 18 drückt den Dichtungseinsatz 15 an die Wickelschlauchoberfläche. Auch bei dieser Ausführungsform weist der Dichtungseinsatz 15 eine wendelförmig umlaufende Nut 12 in seiner mit der Wickelschlauchoberfläche in Kontakt stehenden Innenoberfläche auf. Die aus der Wickelschlauchoberfläche hervorstehende wendelförmige Armierung (wendelförmiger Metalldraht 5) fasst bei montierter Pressverbindung (Fig. 6) in diese wendelförmig umlaufende Nut 12 formschlüssig ein. Das Eingreifen des Metalldrahtes 5 in die Nut 12 erfolgt auch hier zweckmäßigerweise ohne Spiel bzw. im Wesentlichen ohne Spiel. Bei dieser Ausführungsform können an der dem Dichtungseinsatz 15 zugewandten Innenseite des Pressmantels 18 ebenfalls Druckelemente vorgesehen sein, die im montierten Zustand der Pressverbindungsanordnung den Dichtungseinsatz 15 an den Wickelschlauch 1 drücken. Diese Druckelemente sind in den Figuren nicht dargestellt worden. Es kann sich auch hier um im Querschnitt kreisförmige bzw. ringförmige Rippen an der Innenseite des Pressmantels 18 handeln, die jeweils über den Innenumfang des Pressmantels 18 umlaufen. Beim Herstellen der Pressverbindung verkrallen sich diese Druckelemente gleichsam in dem Dichtungseinsatz 15.

Vorzugsweise und im Ausführungsbeispiel nach den Fig. 6 und 7 weist der Pressmantel 18 der Presshülse 17 im Übrigen einen nach innen gerichteten Kragen 19 auf, der über den Innenumfang des Pressmantels 18 umläuft und als Formschlusselement im montierten Zustand der Pressverbindungsanordnung einen als Komplementärformschlusselement ausgebildeten Formschlusssteg 14 des Schlauchstutzens 2 formschlüssig hintergreift. Diese formschlüssige Verbindung zwischen Pressmantel 18 und Schlauchstutzen 2 blockiert ein Herausschieben des Schlauchstutzens 2 aus dem Wickelschlauch 1. In der Fig. 6 ist im Übrigen erkennbar, dass vorzugsweise und im Ausführungsbeispiel die Presshülse 17 mit dem wickelschlauchseitigen Schlauchstutzenende 6 gleichsam bündig abschließt. Das wickelschlauchseitige Schlauchstutzenende 6, das Ende des Dichtungseinsatzes 15 und das Ende des Pressmantels 18 liegen somit im Ausführungsbeispiel in einer Flucht.

Bei allen Ausführungsformen der Erfindung läuft die wendelförmige Nut 12 vorzugsweise mehrmals, zumindest dreimal, über den Innenumfang des Dichtungseinsatzes 15 um. Die formschlüssige Verbindung zwischen der Wickelschlauchoberfläche und der Innenoberfläche des Fixierungsaggregates erstreckt sich vorzugsweise über zumindest 70 %, bevorzugt über zumindest 80 % und besonders bevorzugt über zumindest 90 % der axialen Länge des Fixierungsaggregates. Axiale Länge bezieht sich hier auf die Längsrichtung von Wickelschlauch 1, Schlauchstutzen 2 und Fixierungsaggregat.

## Patentansprüche

1. Verbindungsanordnung für Wickelschläuche (1) wobei ein Wickelschlauch (1) und ein in den Wickelschlauch (1) formschlüssig einfassender Schlauchstutzen (2) vorgesehen sind,
wobei der Wickelschlauch (1) durch wendelförmiges Aufwickeln zumindest eines Kunststoffstreifens (3) hergestellt ist, wobei Längskantenabschnitte (4) benachbarter Wendelwicklungen des Kunststoffstreifens (3) überlappend miteinander verbunden sind, wobei der Kunststoffstreifen (3) mit einer drahtförmigen oder bandförmigen Armierung wendelförmig zu dem Wickelschlauch (1) kontinuierlich gewickelt ist und wobei die drahtförmige oder bandförmige Armierung zwischen den überlappenden Längskantenabschnitten (4) eingeschweißt ist,
wobei weiterhin ein zylinderförmiges Fixierungsaggregat in Form von zumindest zwei Klemmschalen (8, 9) vorgesehen ist, die sich bei montierter Verbindungsanordnung zu einem zylinderförmigen Klemmschalenaggregat (10) ergänzen und den Wickelschlauch (1) im Bereich des einfassenden Schlauchstutzens (2) zumindest bereichsweise klemmend formschlüssig umgeben,
wobei das Klemmschalenaggregat (10) zumindest einen innenseitigen zylinderförmigen Dichtungseinsatz (15) aufweist und wobei der Dichtungseinsatz (15) an seiner mit der Wickelschlauchoberfläche in Kontakt stehenden Innenoberfläche zumindest eine Vertiefung, vorzugsweise eine wendelförmig umlaufende Nut aufweist, in die eine an der Wickelschlauchoberfläche ausgebildete Erhebung formschlüssig eingreift
und wobei sowohl der Kunststoffstreifen des Wickelschlauches als auch der Dichtungseinsatz aus Polyurethan bestehen.

2. Verbindungsanordnung für Wickelschläuche (1), wobei ein Wickelschlauch (1) und ein in den Wickelschlauch (1) formschlüssig einfassender Schlauchstutzen (2) vorgesehen sind,
wobei der Wickelschlauch (1) durch wendelförmiges Aufwickeln zumindest eines Kunststoffstreifens (3) hergestellt ist, wobei Längskantenabschnitte (4) benachbarter Wendelwicklungen des Kunststoffstreifens (3) überlappend miteinander verbunden sind, wobei der Kunststoffstreifen (3) mit einer drahtförmigen oder bandförmigen Armierung wendelförmig zu dem Wickelschlauch (1) kontinuierlich gewickelt ist und wobei die drahtförmige oder bandförmige Armierung zwischen den überlappenden Längskantenabschnitten (4) eingeschweißt ist,
wobei weiterhin ein zylinderförmiges Fixierungsaggregat in Form einer zylinderförmigen Presshülse (17) vorgesehen ist, welche Presshülse (17) im montierten Zustand der Verbindungsanordnung bzw. Pressverbindungsanordnung außen einen verpressten zylinderförmigen Pressmantel (18) aufweist sowie innenseitig einen zylinderförmigen Dichtungseinsatz (15) aufweist, wobei die Presshülse (17) bei montierter Verbindungsanordnung den Wickelschlauch (1) im Bereich des einfassenden Schlauchstutzens (2) zumindest bereichsweise formschlüssig umgibt,
wobei der Dichtungseinsatz (15) an seiner mit der Wickelschlauchoberfläche in Kontakt stehenden Innenoberfläche zumindest eine Vertiefung, vorzugsweise eine wendelförmig umlaufende Nut aufweist, die in eine an der Wickelschlauchoberfläche ausgebildete Erhebung formschlüssig eingreift
und wobei sowohl der Kunststoffstreifen des Wickelschlauches als auch der Dichtungseinsatz aus Polyurethan bestehen.

3. Verbindungsanordnung nach einem der Ansprüche 1 oder 2, wobei die Erhebung an der Wickelschlauchoberfläche die aus der Wickelschlauchoberfläche hervorstehende wendelförmige Armierung ist und wobei die wendelförmige Armierung bei montierter Verbindungsanordnung in die zumindest eine in der Innenoberfläche des Dichtungseinsatzes (15) vorhandene Vertiefung (12) formschlüssig einfasst.

4. Verbindungsanordnung nach Anspruch 3, wobei die Vertiefung als wendelförmig über den Innenumfang des Dichtungseinsatzes (15) umlaufende Nut (12) ausgebildet ist.

5. Verbindungsanordnung nach einem der Ansprüche 1 bis 4, wobei das Fixierungsaggregat zumindest ein Formschlusselement aufweist, welches Formschlusselement bei montierter Verbindungsanordnung mit einem Komplementärformschlusselement am Schlauchstutzen (2) mit der Maßgabe wechselwirkt, dass ein Herausschieben des Schlauchstutzens (2) aus dem Wickelschlauch (1) blockiert wird.

6. Verbindungsanordnung nach Anspruch 5, wobei das Formschlusselement eine über zumindest einen Teil des Innenumfangs des Fixierungsaggregates umlaufende Formschlussnut (13) ist und wobei das Komplementärformschlusselement ein über zumindest einen Teil des Außenumfanges des Schlauchstutzens (2) umlaufender Formschlusssteg (14) ist.

7. Verbindungsanordnung nach Anspruch 1, wobei die Klemmschalen (8, 9) innenseitig vorstehende Druckelemente aufweisen, die im montierten Zustand der Verbindungsanordnung bzw. Klemmverbindungsanordnung den Dichtungseinsatz (15) an den Wickelschlauch (1) drücken.

8. Verbindungsanordnung nach Anspruch 2, wobei der Pressmantel (18) innenseitig vorstehende Druckelemente aufweist, die im montierten Zustand der Verbindungsanordnung bzw. Pressverbindungsanordnung den Dichtungseinsatz (15) an den Wickelschlauch (1) drücken.

## Claims

1. A connection arrangement for wrapped hoses (1), whereby a wrapped hose (1) and a hose nipple (2) enclosed inside the wrapped hose (1) in a form-closed manner are provided,
whereby the wrapped hose (1) is fabricated by helically winding at least a plastic strip (3), whereby the longitudinal edge sections (4) of adjacent helically wound plastic strip (3) are connected with one another in an overlapped manner, whereby the plastic strip (3) with a wire-shaped or a tape-shaped armouring is helically wound continuously on the wrapped hose (1) and whereby the wire-shaped or tape-shaped armouring between the overlapping longitudinal edge sections (4) is welded,
whereby, moreover, a cylindrical fixing set in the form of at least two clamping shells (8, 9) is provided, which, in a mounted connection arrangement, complement one another to form a cylindrical clamping shell set (10) and surrounds the wrapped hose (1) in the section of the enclosed hose nipple (2) at least section-wise in a clamping, form-closed manner,
whereby, the clamping shell set (10) features at least an internal cylindrical sealing insert (15) and whereby the sealing insert (15) on its internal surface in contact with the wrapped hose surface features at least a depression, preferably features a helically surrounding groove in which a raised point on the wrapped hose surface interlocks in a form-closed manner,
in addition, whereby both the plastic strip of the wrapped hose as well as the sealing insert are made of polyurethane.

2. The connection arrangement for wrapped hoses (1), whereby a wrapped hose (1) and a hose nipple (2) enclosed in a form-closed manner inside the wrapped hose (1) are provided,
whereby the wrapped hose (1) is fabricated by helically winding at least a plastic strip (3), whereby the longitudinal edge sections (4) of adjacent spiral windings of the plastic strip (3) are connected with one another in an overlapped manner, whereby the plastic strip (3) with a wire-shaped or a tape-shaped armouring is helically wound continuously on the wrapped hose (1) and whereby the wire-shaped or tape-shaped armouring between the overlapping longitudinal edge sections(4) is welded,
whereby, moreover, a cylindrical fixing set in the form of a cylindrical press-sleeve (17) is provided, whereby the press sleeve (17) in the mounted state of the connection arrangement or press connection arrangement externally features a pressed cylindrical press jacket (18) as well as an internal cylindrical sealing insert (15), whereby the press sleeve (17), in a mounted connection arrangement, at least surrounds the wrapped hose (1) section-wise in a form-closed manner in the section enclosing the hose nipple (2),
whereby the sealing insert (15) features at least a depression on its internal surface in contact with the wrapped hose surface, preferably featuring a helically surrounding groove in which a raised point on the wrapped hose surface interlocks in a form-closed manner,
in addition, whereby both the plastic strip of the wrapped hose as well as the sealing insert are made of polyurethane.

3. The connection arrangement according to one of the claims 1 or 2, whereby the raised point on the wrapped hose surface is the helical armouring protruding out of the wrapped hose surface and whereby the helical armouring in the mounted connection arrangement is enclosed in at least one depression (12) available in the interior surface of the sealing insert (15) in a form-closed manner.

4. The connection arrangement according to claim 3, whereby the depression is formed as a helical groove (12) revolving over the interior circumference of the sealing insert (15).

5. The connection arrangement according to one of the claims 1 to 4, whereby the fixing set at least features a form-closed element of which the form-closed element in a mounted connection arrangement interacts with a complementary form-closed element on the hose nipple (2) in that it blocks the hose nipple (2) from being pushed out of the wrapped hose (1).

6. The connection arrangement according to claim 5, whereby the form-closed element is a form-closed groove (13) revolving over at least a part of the interior circumference of the fixing set and whereby the complementary form-closed element is a form-closed web (14) revolving over at least a part of the external circumference of the hose nipple (2).

7. The connection arrangement according to claim 1, whereby the clamping shells (8, 9) feature internally projecting pressure elements that, in the mounted state of the connection arrangement or clamping connection arrangement, press the sealing insert (15) on the wrapped hose (1).

8. The connection arrangement according to claim 2, whereby the press jacket (18) features internally projecting pressure elements that press the sealing insert (15) on the wrapped hose (1), in the mounted state of the connection arrangement or press connection arrangement.

## Revendications

1. Agencement de jonction pour flexibles enroulés (1), sachant qu'ont été prévus un flexible enroulé (1) et un embout (2) retenant par adhérence de formes le flexible enroulé (1),
sachant que le flexible enroulé (1) est fabriqué par enroulement en spirale d'au moins une bande (3) en matière plastique, sachant que des segments (4) des bords longitudinaux des spires de la bande plastique (3) enroulées voisines sont reliés entre eux avec chevauchement, sachant que la bande plastique (3) est enroulée continuellement en spirale avec une armature en forme de fil ou de ruban pour former un flexible enroulé (1), et sachant que l'armature en forme de fil ou de ruban est soudée entre les segments (4) des bords longitudinaux en chevauchement,
sachant qu'est prévu en outre un groupe d'immobilisation ayant la forme d'au moins deux coques de bridage (8, 9) qui, lorsque l'agencement de jonction est monté, se complètent pour former un groupe (10) cylindrique de coques de bridage, et entourent par adhérence de formes et avec un bridage au moins local, le flexible enroulé (1) dans la zone de l'embout (2) de retenue,
sachant que le groupe (10) de coques de bridage présente au moins un insert d'étanchéité (15) interne cylindrique, et sachant que l'insert d'étanchéité (15) présente, sur sa surface intérieure en contact avec la surface du flexible enroulé, au moins un creux, de préférence une rainure au tracé spiralé dans laquelle engrène par adhérence de formes une nervure formée à la surface du flexible enroulé
et sachant qu'aussi bien la bande plastique du flexible enroulé que l'insert d'étanchéité sont en polyuréthane.

2. Agencement de jonction pour flexibles enroulés (1), sachant qu'ont été prévus un flexible enroulé (1) et un embout (2) retenant par adhérence de formes le flexible enroulé (1),
sachant que le flexible enroulé (1) est fabriqué par enroulement en spirale d'au moins une bande (3) en matière plastique, sachant que des segments (4) des bords longitudinaux des spires de la bande plastique (3) enroulées voisines sont reliés entre eux avec chevauchement, sachant que la bande plastique (3) est enroulée continuellement en spirale avec une armature en forme de fil ou de ruban pour former un flexible enroulé (1), et sachant que l'armature en forme de fil ou de ruban est soudée entre les segments (4) des bords longitudinaux en chevauchement,
sachant qu'est prévu en outre un groupe cylindrique d'immobilisation ayant la forme d'au moins une douille sertie (17) en forme de cylindre, laquelle douille sertie (17) présente à l'extérieur, lorsque l'agencement de jonction et/ou l'agencement de jonction sertie se trouve à l'état monté, une gaine sertie (18) cylindrique, ainsi que sur le côté intérieur un insert d'étanchéité (15) cylindrique, sachant que, lorsque l'agencement de jonction se trouve à l'état monté, la douille sertie (17) entoure par adhérence de formes et avec bridage au moins local le flexible enroulé (1) dans la zone de l'embout de retenue (2) du flexible,
sachant que l'insert d'étanchéité (15) présente, sur sa surface intérieure en contact avec la surface du flexible enroulé, un creux, de préférence une rainure au tracé spiralé dans laquelle engrène une nervure formée à la surface du flexible enroulé
et sachant qu'aussi bien la bande plastique du flexible enroulé que l'insert d'étanchéité sont en polyuréthane.

3. Agencement de jonction selon l'une des revendications 1 ou 2, sachant que la nervure à la surface du flexible enroulé est l'armature spiralée faisant saillie à la surface du flexible enroulé, et sachant que, lorsque l'agencement de jonction se trouve à l'état monté, l'armature spiralée pénètre avec adhérence de formes dans au moins un creux (12) présent dans la surface intérieure de l'insert d'étanchéité (15).

4. Agencement de jonction selon la revendication 3, **caractérisé en ce que** le creux est configuré en forme de rainure (12) décrivant une spirale sur la circonférence intérieure de l'insert d'étanchéité (15).

5. Agencement de jonction selon l'une des revendications 1 à 4, sachant que le groupe d'immobilisation présente au moins un élément à adhérence de formes, lequel élément interagit, lorsque l'agencement de jonction se trouve à l'état monté, avec un élément complémentaire à adhérence de formes situé contre l'embout de flexible (2), de sorte à bloquer tout glissement de l'embout (2) hors du flexible enroulé (1).

6. Agencement de jonction selon la revendication 5, sachant que l'élément à adhérence de formes est une rainure (13) à adhérence de formes présente sur au moins une partie de la circonférence intérieure du groupe d'immobilisation, et sachant que l'élément complémentaire à adhérence de formes est une nervure (14) à adhérence de formes présente sur au moins une partie de la circonférence extérieure de l'embout (2) du flexible.

7. Agencement de jonction selon la revendication 1, sachant que les coques de bridage (8, 9) présentent des éléments compresseurs faisant saillie du côté intérieur et qui,
lorsque l'agencement de jonction et/ou l'agencement à jonction de bridage se trouve à l'état monté, poussent l'insert d'étanchéité (15) contre le flexible enroulé (1).

8. Agencement de jonction selon la revendication 2, sachant que la gaine sertie (18) présente du côté intérieur des éléments de compression faisant saillie qui, lorsque l'agencement de jonction et/ou l'agencement à jonction sertie se trouve à l'état monté, poussent l'insert d'étanchéité (15) contre le flexible enroulé (1).
